# FASCICULE DE BREVET EUROPEEN

(11) **EP 2 192 638 B1**
(45) Date de publication et mention de la délivrance du brevet: **03.04.2013**
(21) Numéro de dépôt: 09175987.8
(22) Date de dépôt: 13.11.2009
(51) Int. Cl.: H01M 2/08, H01M 6/18, H01M 2/02, H01M 10/052, H01M 10/058

(54) **Microbatterie sur substrat à encapsulation monolithique**
Mikrobatterie auf Substrat mit monolithischer Einkapselung
Microbattery on a substrate with monolithic encapsulation

(30) Priorité: 21.11.2008 FR 0806540
(43) Date de publication de la demande: 02.06.2010
(73) Titulaire: Commissariat à l'Énergie Atomique et aux Énergies Alternatives, 75015 Paris (FR)
(72) Inventeur: Bedjaoui, Messaoud, 38130 Echirolles (FR); Martin, Steve, 38160 Saint-Sauveur (FR)
(74) Mandataire: de Jong, Jean Jacques

(56) Documents cités:
- US-A- 5 561 004
- US-A1- 2005 147 877
- US-A1- 2008 263 855

## Description

### Domaine technique de l'invention

L'invention est relative à une microbatterie comportant un premier collecteur de courant et un second collecteur de courant disposés sur un substrat, un empilement, comportant deux électrodes séparées par un film électrolytique, chaque électrode étant reliée à un collecteur correspondant, l'une des électrodes étant une anode à base de lithium, ledit empilement étant recouvert par une encapsulation comportant une couche métallique, le premier collecteur de courant faisant saillie hors de l'encapsulation, et le second collecteur étant en contact avec la couche métallique.

### État de la technique

Les microbatteries au lithium comportent essentiellement des éléments réactifs, notamment l'anode qui est constituée très souvent de composants lithiés. Le lithium métallique réagit rapidement à l'exposition aux éléments atmosphériques tels que l'oxygène, l'azote ou encore la vapeur d'eau entraînant un vieillissement accéléré de la batterie. Des protections ont été développées pour pallier à ces problèmes de détérioration. Ainsi, les microbatteries sont classiquement dotées d'une enveloppe de protection suffisament étanche vis-à-vis de l'atmosphère et parfaitement compatible avec les couches utilisées dans la microbatterie pour prévenir toute fuite.

Il existe deux concepts de protection, l'enveloppe et l'encapsulation monolithique.

Une microbatterie est dite enveloppée lorsqu'un capot étanche à l'atmosphère est rapporté au-dessus de la microbatterie pour la protéger. Classiquement, le collage du capot est réalisé sous atmosphère contrôlée en présence d'un gaz inerte comme l'argon. Cette technologie comporte plusieurs inconvénients dont les principaux sont la fiabilité à long terme de la microbatterie et la difficulté de contrôler l'étanchéité du capot afin d'éviter toute contamination avec l'extérieur. De plus, les microbatteries enveloppées ont en général des dimensions trop importantes qui ne répondent pas aux exigences des cahiers des charges.

Dans une encapsulation monolithique, la barrière, séparant les composants à risques de l'environnement extérieur, est réalisée par dépôt de couches minces.

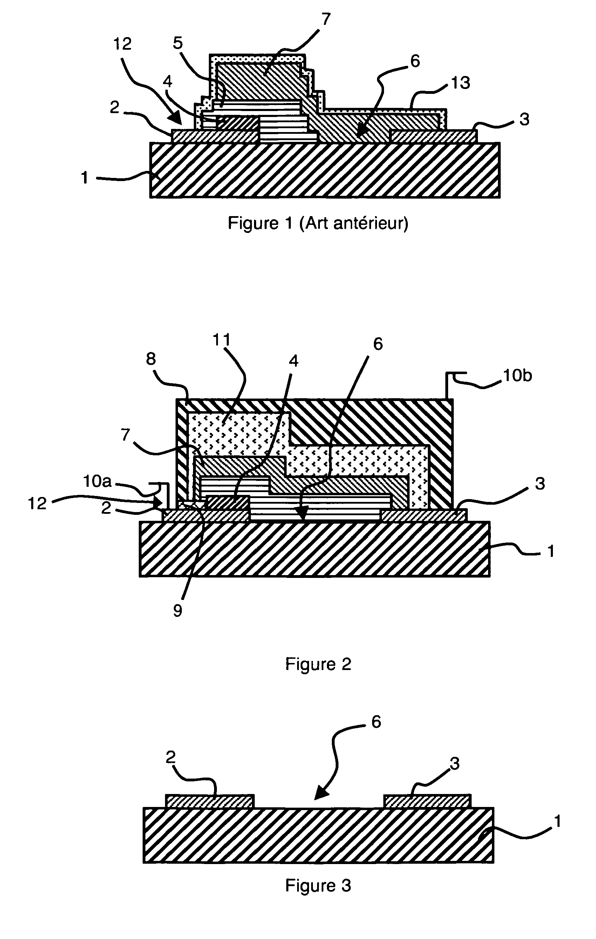

Le brevet US5,561,004 décrit une microbatterie à encapsulation monolithique. Comme illustré à la figure 1, la microbatterie est réalisée sur un substrat de base 1 sur lequel sont disposés un premier collecteur de courant 2 et un second collecteur de courant 3, les collecteurs de courant 2 et 3 sont séparés par une portion 6 de substrat. Sur le premier collecteur de courant 2 (à gauche sur la figure 1), une couche formant une cathode 4 est déposée en laissant une zone extérieure libre 12 du premier collecteur 2 sur la gauche de la cathode 4, permettant de réaliser les connexions électriques. Un film électrolytique 5 est ensuite déposé de manière à recouvrir la cathode 4, une section de la portion 6 de substrat séparant les deux collecteurs 2 et 3 ainsi qu'une partie de la zone libre du premier collecteur 2. Une anode 7 en lithium est disposée au-dessus du film électrolytique 5 et recouvre une partie du second collecteur de courant 3. L'empilement cathode/film électrolytique/anode est ensuite recouvert par une couche d'encapsulation 13 comportant une couche de polymère et une couche métallique. Le brevet suggère d'isoler électriquement la couche métallique : en effet, sans isolation les deux collecteurs 2, 3 de la figure 1 sont mis en court-circuit. Cependant, le brevet ne précise pas où réaliser l'isolation, ni le type de matériau à utiliser. Or, les contraintes actuelles nécessitent que les microbatteries au lithium durent au moins 10 ans, ce qui correspond pour certains types de batteries à une valeur barrière de l'oxygène et de l'humidité de 10⁻⁴ g/m²/J. Le choix du matériau doit donc tenir compte de ces contraintes et doit être cohérent avec les couches adjacentes pour ne pas les détériorer.

### Objet de l'invention

L'objet de l'invention a pour but une microbatterie ayant une valeur barrière suffisante de l'oxygène et de l'humidité, et dont la cohérence des matériaux constituant les différentes couches évite toute dégradation de la microbatterie.

Ce but est atteint par les revendications annexées, et en particulier grâce à un bouchon en alumine, d'épaisseur inférieure à 30nm, disposé entre le premier collecteur de courant et la couche métallique, l'électrode en contact avec le premier collecteur de courant étant isolée électriquement de la couche métallique par le bouchon en alumine.

L'invention concerne aussi un procédé de fabrication comportant successivement :
- la formation sur le substrat du premier collecteur de courant et du second collecteur de courant,
- la formation du bouchon en alumine sur le premier collecteur et la réalisation de l'empilement,
- l'encapsulation de l'empilement par une couche métallique en contact électrique avec le second collecteur de courant d'une part et en contact avec le bouchon en alumine d'autre part.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre une microbatterie selon l'art antérieur.
La figure 2 illustre une microbatterie selon un mode de réalisation de l'invention.
Les figures 3 à 5 illustrent un procédé de fabrication d'une microbatterie selon la figure 2.
La figure 6 illustre un second mode de réalisation d'une microbatterie selon l'invention.

### Description de modes particuliers de réalisation

Une microbatterie comporte, comme illustré à la figure 2 un premier collecteur de courant 2 et un second collecteur de courant 3 disposés sur un substrat 1. Un empilement classique, comportant deux électrodes 4, 7 séparées par un film électrolytique 5, est disposé entre les deux collecteur de courant 2 et 3. Chaque électrode 4, 7 est en contact électrique avec un collecteur de courant 2, 3 correspondant. L'une des électrodes est une anode 7 en lithium ou à base de lithium. L'empilement est recouvert par une encapsulation comportant une couche métallique 8 permettant une protection optimale dudit empilement aux attaques de l'environnement extérieur. Afin d'éviter tout court-circuit entre les deux collecteurs de courant 2 et 3, il est nécessaire d'isoler la couche métallique 8 du premier collecteur de courant 2 tout en gardant un bon compromis sur la perméabilité de la microbatterie. L'isolation répondant aux contraintes est réalisée par un bouchon 9 en alumine disposé entre le premier collecteur de courant 2 et la couche métallique 8 permettant une encapsulation efficace de la microbatterie. Une partie du premier collecteur de courant 2 fait saillie hors de l'encapsulation, rendant ce dernier accessible pour effectuer les connexions de la microbatterie. Le second collecteur de courant 3 est quant à lui en contact avec la couche métallique 8 de l'encapsulation. Bien entendu, pour éviter un court-circuit entre l'électrode en contact avec le premier collecteur de courant 2 et la couche métallique 8, ces deux éléments sont isolés électriquement l'un de l'autre, cette isolation peut être réalisée par le bouchon en alumine.

Les technologies actuelles ne permettent pas d'obtenir des couches épaisses d'alumine non poreuse, c'est-à-dire que l'étanchéité à la vapeur d'eau, l'oxygène et l'azote d'un bouchon 9 en alumine réalisé en couche épaisse ne peut satisfaire les conditions requises de pénétration par exemple inférieures à 10⁻⁴g/m²/J. De plus, le fait de placer le bouchon 9 en alumine dans la partie basse de la microbatterie et de le mettre en contact avec le film électrolytique 5 et/ou l'anode 7 en lithium, pose un problème sur le rendement de la microbatterie. En effet, lors du fonctionnement de la microbatterie, les ions vont se déplacer de l'anode 7 vers la cathode 4, et le risque que le lithium diffuse dans les couches inférieures de la batterie n'est pas négligeable. Si le lithium venait à diffuser dans le matériau servant de bouchon 9, cela aurait une double conséquence, la diminution du rendement de la batterie et la détérioration du bouchon 9, pouvant le rendre poreux aux attaques de l'environnement extérieur, voir électriquement conducteur. Bien que ce risque puisse être partiellement compensé par l'augmentation de l'épaisseur de la couche d'alumine, cela serait aux dépens de l'étanchéité. Il est nécessaire que le bouchon en alumine permette un bon compromis entre l'étanchéité et la diffusion du lithium. Ce compromis est atteint si le bouchon en alumine a une épaisseur inférieure à 30nm, et de préférence comprise entre 20nm et 30nm. En effet, un tel bouchon est stable chimiquement et très dense physiquement, c'est-à-dire qu'il présente une très faible porosité. Des tests ont été effectués sur un empilement constitué d'une couche de lithium et d'une couche d'alumine de 25nm, la couche d'alumine étant déposée, par exemple, par dépôt de couche atomique (« ALD » pour atomic layer deposition en anglais). Aucune diffusion ou interaction entre ces deux couches n'a été relevée. De plus, lors des tests, l'empilement a subi un recuit à 300°C sans qu'aucune interaction ne soit observable. Ces tests ont donc montré l'inertie, la stabilité chimique et thermique d'une couche d'alumine d'épaisseur nanométrique en contact avec une couche de lithium.

De manière générale, le dépôt de la couche formant le bouchon 9 en alumine en utilisant, de préférence, le dépôt de couche atomique ALD procure au bouchon 9 une densité et un arrangement atomique tels qu'une couche très fine devient imperméable à l'oxygène tout en ayant des propriétés d'isolation électrique. À titre de contre exemple, une couche de 80nm en alumine possède un coefficient compris entre 10⁻³ et 10⁻² g/m²/J, un tel coefficient n'est pas suffisant pour assurer une bonne imperméabilité.

De préférence, la couche formant le bouchon 9 en alumine a une épaisseur comprise entre 20 et 30nm.

L'alumine en couche nanométrique devient un très bon matériau au niveau de la caractéristique de la pénétration de gaz oxydant. En effet, il peut posséder un coefficient de pénétration de 10⁻⁵ g/m²/J inférieur au maximum préférable de 10⁻⁴ g/m²/J permettant un fonctionnement prolongé de la microbatterie. La réalisation d'une couche d'encapsulation en alumine aurait pu être suffisante, cependant ce matériau est relativement cassant et la dilatation de la microbatterie en fonctionnement aurait entraîné des contraintes mécaniques risquant de fissurer la couche d'encapsulation. La couche d'encapsulation une fois fissurée aurait perdu toutes ses propriétés de barrière à l'environnement. C'est pourquoi il a été choisi d'utiliser un bouchon en alumine en couche nanométrique, dont les propriétés de résistance à la diffusion du lithium étaient jusqu'alors inconnues, pour compléter une encapsulation métallique tout en laissant accessibles les collecteurs sur une même face du substrat.

D'autres matériaux tels que la silice ou le nitrure de silicium ont été testés pour réaliser le bouchon 9. La silice a été écartée car le coefficient de pénétration de ce matériau est de l'ordre à 10⁻² g/m²/J ce qui est insuffisant. Le nitrure de silicium a aussi écarté car son coefficient de pénétration est de 10⁻³ g/m²/J.

Le premier collecteur de courant 2, sur lequel est disposé le bouchon 9 en alumine, fait saillie de l'encapsulation, la zone 12 laissée libre par la saillie permet d'installer une première borne de connexion 10a, une seconde borne 10b pouvant être disposée sur la couche métallique 8. Cette saillie permet d'éviter de percer le substrat par sa face opposée à la microbatterie afin d'effectuer les branchements électriques sur le premier collecteur de courant 2. Ceci est possible grâce à la faible perméabilité de la couche nanométrique d'alumine formant le bouchon 9, permettant au premier collecteur de courant 2 de faire saillie de l'encapsulation sans dégrader prématurément la batterie tout en isolant électriquement le premier collecteur de courant 2 du second collecteur de courant 3.

Selon l'exemple de réalisation particulier illustré à la figure 2, la microbatterie est réalisée sur un substrat 1 de base sur lequel sont disposés les premier et et second collecteurs de courant 2, 3 séparés par une portion 6 de substrat. Une cathode 4 est disposée sur le premier collecteur de courant 2 (à gauche sur la figure 1), et le bouchon 9 en alumine est accolé à la cathode 4 sur la gauche de cette dernière en laissant une zone libre 12 du collecteur à gauche du bouchon en alumine 9. Le film électrolytique 5 recouvre la totalité du bouchon 9 (figure 2) et au moins une section de la portion 6 du substrat séparant les deux collecteurs de courant 2 et 3. Dans ce cas, le film 5 peut aussi couvrir une partie du bouchon 9 en alumine. Le film électrolytique 5 peut aussi recouvrir la totalité de la portion 6 du substrat 1, séparant les deux collecteurs de courant 2 et 3, et une zone du deuxième collecteur 3 : cela permet d'augmenter le volume de l'électrolyte sans augmenter son épaisseur. L'anode 7 à base de lithium est disposée au-dessus du film électrolytique 5 et est en contact électrique avec le second collecteur de courant 3. L'anode 7 peut aussi recouvrir entièrement le film électrolytique 5, et donc être en contact avec le bouchon 9 en alumine. L'empilement cathode/film électrolytique/anode peut être recouvert par une encapsulation comportant une couche de recouvrement 11, de préférence, en polymère, puis par une couche métallique 8. Bien que la couche métallique 8 aurait pu être déposée directement au dessus de l'anode 7, son dépôt aurait détérioré le lithium constituant l'anode 7, entraînant ainsi une perte de rendement de la batterie. C'est pourquoi une couche de recouvrement 11 recouvrant entièrement l'anode est déposée avant de recouvrir l'empilement par la couche métallique 8 jusqu'aux deux collecteurs de courant 2 et 3. De plus, la couche en polymère peut présenter une rugosité de surface plus faible que celle de l'anode. Les performances de la couche barrière métallique sont ainsi accrues. Le deuxième collecteur 3 est en contact électrique avec la couche métallique 8 d'encapsulation et le premier collecteur 2 est isolé électriquement de la couche métallique par le bouchon 9 en alumine. Bien entendu, si la couche de recouvrement 11 est à la fois en contact avec le premier collecteur et le second collecteur, cette dernière est électriquement isolante pour éviter tout court-circuit.

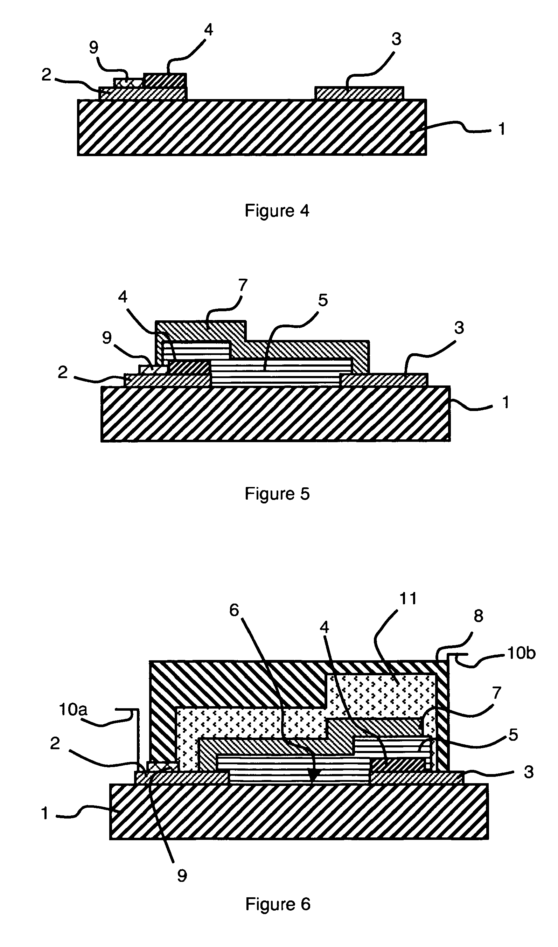

Selon un second mode de réalisation illustré à la figure 6, la cathode 4 est disposée sur le second collecteur de courant 3. Le film électrolytique 5 recouvre la cathode 4, la portion 6 de substrat et une partie du premier collecteur de courant 2. L'anode 7 en lithium est disposée au-dessus du film électrolytique, et est en contact électrique avec le premier collecteur de courant 2. Une couche de recouvrement 11 en polymère recouvre l'empilement. L'encapsulation est complétée par le bouchon en alumine 9 disposé sur le premier collecteur de courant 2 et par une couche métallique 8, isolée du premier collecteur de courant 2 par le bouchon en alumine 9, et en contact avec le second collecteur de courant 3. Le premier collecteur fait saillie hors de l'encapsulation pour permettre la réalisation d'une première borne de connexion 10a. Une seconde borne de connexion 10b est reliée à la couche métallique 8.

Afin d'éviter un court-circuit de l'empilement avec la couche métallique 8, l'électrode en contact avec le premier collecteur de courant 2 doit être isolée électriquement de la couche métallique 8. Cette isolation peut être réalisée par la couche de recouvrement 11, par exemple en polymère, intercalée entre la couche métallique 8 et l'empilement. Bien entendu, comme précédemment décrit, le bouchon 9 en alumine participe aussi à cette isolation électrique.

Le procédé de réalisation de la microbatterie comporte au moins les étapes suivantes :
- la formation sur le substrat 1 du premier collecteur de courant 2 et du second collecteur de courant 3,
- la formation d'un bouchon 9 en alumine, d'une épaisseur inférieure à 30nm, et de préférence comprise entre 20 et 30nm, sur le premier collecteur de courant 2 et la réalisation de l'empilement comportant le film électrolytique 5 pris en sandwich entre l'anode 7 et la cathode 4,
- l'encapsulation de l'empilement par une couche métallique 8 en contact électrique avec le second collecteur 3 d'une part et en contact avec le bouchon en alumine 9 d'autre part.

Selon un exemple particulier de réalisation illustré aux figures 2 à 5, le procédé de réalisation de la microbatterie comporte une première étape consistant à former sur un substrat 1 de support les premier et second collecteurs de courant 2, 3 sur une même face du substrat 1 de support (figure 3), ces deux collecteurs de courant 2, 3 étant espacés par une portion 6 de substrat. Les substrats utilisés sont généralement du verre, du silicium ou du silicium nitruré. Le silicium nitruré présente l'avantage d'une plus grande résistance à la diffusion du lithium, il sera donc préféré. Cette étape de formation des premier et second collecteurs de courant 2, 3 peut être réalisée par tout type de technique de dépôt en couches minces telles que la déposition par vapeur physique (PVD pour « Physical Vapor Deposition » en anglais) ou la déposition par vapeur chimique (CVD pour « Chemical Vapor Deposition » en anglais). De préférence, les premier et second collecteurs 2, 3 sont réalisés en titane, en tungstène ou en or, et ont une épaisseur d'environ 200nm.

Ensuite, il est déposé une couche en alumine pour former le bouchon 9 sur le premier collecteur 2, en laissant de part et d'autre du bouchon 9 une zone libre du premier collecteur de courant 2. Ce bouchon 9 en alumine a une épaisseur inférieure à 30nm, de préférence comprise entre 20 et 30nm, et est réalisé par dépôt atomique (ALD « pour atomic layer deposition » en anglais) à température ambiante. Par température ambiante, on entend une température comprise entre 20°C et 60°C. La cathode 4 est ensuite formée sur la droite du bouchon 9 (sur la figure 4). Cette cathode 4 est en contact avec le bouchon 9 en alumine et a une épaisseur supérieure à l'épaisseur du bouchon 9 en alumine. La cathode s'étend, de préférence, du bouchon 9 à l'extrémité du premier collecteur de courant 2 qui est orientée vers le second collecteur de courant 3. La cathode 4 est, de préférence, déposée par des procédés classiques tels que l'évaporation sous vide ou la pulvérisation cathodique. Le plus souvent, la cathode 4 peut être réalisée en oxysulfure de titane TiOS, en pentoxyde de vanadium V₂O₅ ou en disulfure de titane TiS₂. Un des avantages du procédé ALD est la faible température mise en jeu. Ainsi, les autres matériaux déjà déposés ne risquent pas d'être détériorés contrairement aux procédés de dépôts classiques de la silice ou du nitrure de silicium qui exigent des températures de dépôt de l'ordre de 400°C.

De ce fait, la cathode 4 peut donc être déposée aussi bien avant qu'après la réalisation du bouchon. Cependant, il peut être avantageux de réaliser au préalable l'ensemble substrat/collecteurs/bouchon lors d'une première étape dans un bâti classique de dépôt puis de transférer cet ensemble dans un autre bâti dédié aux dépôts des couches spécifiques de l'empilement de la microbatterie.

L'étape suivante consiste à déposer le film électrolytique 5, de préférence, en LiPON. II est généralement élaboré par pulvérisation cathodique (PVD) ou par dépôt chimique en phase vapeur (« CVD » pour chemical vapor deposition en anglais). La pulvérisation cathodique sera préférée car elle permet d'obtenir une couche continue de très faible épaisseur et sans défauts. Son épaisseur est de l'ordre de 1,5µm. Le film électrolytique 5 est, de préférence, formé de manière à recouvrir d'une part la cathode 4 et une partie du bouchon 9 et au moins une partie de la portion 6 du substrat 1 séparant les deux collecteurs (figure 5). De préférence, le film électrolytique 5 recouvre la totalité de la portion séparant les deux collecteurs 2, 3 et une partie du second collecteur 3.

Après le dépôt du film électrolytique 5, on forme, par exemple par pulvérisation, l'anode 7 en lithium dont l'épaisseur moyenne est, de préférence, de 3µm. Cette dernière est déposée de manière à être en contact électrique avec le second collecteur de courant 3 et le film électrolytique 5. Selon une variante, l'anode 7 recouvre la totalité du film électrolytique, et est en contact avec une partie du bouchon 9 en alumine (figure 2).

Pour finir, la microbatterie est encapsulée pour la protéger de l'humidité de l'air. L'étape d'encapsulation comporte le dépôt d'une couche de recouvrement recouvrant totalement l'empilement cathode/film électrolytique/anode. Cette couche de recouvrement 11 est, de préférence, une couche non contrainte et planarisante en polymère tel que le parylène. Une couche planarisante est une couche qui permet de réduire la topographie de surface après son dépôt, c'est-à-dire d'avoir une surface plus plate après dépôt qu'avant dépôt. Cette couche de recouvrement 11 permet, de plus, d'absorber les contraintes mécaniques de la microbatterie en fonctionnement. De préférence, cette couche de recouvrement a une épaisseur comprise entre 2 et 5µm, par exemple 3µm, et peut être obtenue par évaporation sous vide. La couche de polymère en elle-même n'étant pas suffisante pour étanchéifier la microbatterie, elle est recouverte par la couche métallique 8 reliée électriquement au second collecteur 3 et en contact avec le bouchon 9 en alumine qui assure qu'aucun court-circuit n'est possible entre les deux collecteurs de courant 2, 3. La couche métallique 8 d'encapsulation est, de préférence, choisie parmi le groupe formé par le titane, le platine, l'aluminium, le cuivre ou un alliage de ces matériaux.

Bien entendu, le procédé décrit ci-dessus peut être adapté pour réaliser la microbatterie représentée à la figure 6.

## Revendications

1. Microbatterie comportant un premier collecteur de courant (2) et un second collecteur de courant (3) disposés sur un substrat (1), un empilement, comportant deux électrodes (4, 7) séparées par un film électrolytique (5), chaque électrode (4, 7) étant reliée à un collecteur correspondant, l'une des électrodes étant une anode (7) à base de lithium, ledit empilement étant recouvert par une encapsulation comportant une couche métallique (8), le premier collecteur de courant (2) faisant saillie hors de l'encapsulation, et le second collecteur (3) étant en contact avec la couche métallique (8), microbatterie **caractérisée en ce qu'**un bouchon (9) en alumine, d'épaisseur inférieure à 30nm, est disposé entre le premier collecteur de courant (2) et la couche métallique (8), l'électrode en contact avec le premier collecteur de courant (2) étant isolée électriquement de la couche métallique (8) par le bouchon (9) en alumine.

2. Microbatterie selon la revendication 1, **caractérisé en ce que** le bouchon (9) en alumine a une épaisseur comprise entre 20 et 30nm

3. Microbatterie selon l'une quelconque des revendications 1 à 2, **caractérisée en ce que** l'encapsulation comporte une couche de recouvrement (11) en polymère intercalée entre la couche métallique (8) et l'empilement.

4. Procédé de fabrication d'une microbatterie selon l'une quelconque des revendications 1 à 3, **caractérisé en ce qu'**il comporte successivement :
- la formation sur le substrat (1) du premier collecteur de courant (2) et du second collecteur de courant (3),
- la formation du bouchon (9) sur le premier collecteur (2) et la réalisation de l'empilement,
- l'encapsulation de l'empilement par une couche métallique (8) en contact électrique avec le second collecteur de courant (3) d'une part et en contact avec le bouchon (9) en alumine d'autre part.

5. Procédé selon la revendication 4, **caractérisé en ce qu'**une des électrodes est une cathode, en contact avec le premier collecteur de courant, ladite cathode étant réalisée en un matériau choisi parmi TiOS, TiS₂ ou V₂O₅.

6. Procédé selon l'une des revendications 4 et 5, **caractérisé en ce que** le bouchon en alumine est déposé par dépot de couche atomique (ALD) à température comprise entre 20°C et 60°C.

## Claims

1. A microbattery comprising a first current collector (2) and a second current collector (3) arranged on a substrate (1), a stack comprising two electrodes (4, 7) separated by an electrolytic film (5), each electrode (4, 7) being connected to a corresponding collector, one of the electrodes being a lithium-based anode (7), said stack being covered by a packaging comprising a metal layer (8), the first current collector (2) being salient from the packaging and the second current collector (3) being in contact with the metal layer (8), microbattery **characterized in that** an alumina plug (9) with a thickness of less than 30nm is arranged between the first current collector (2) and the metal layer (8), the electrode in contact with the first current collector (2) being electrically insulated from the metal layer (8) by the alumina plug (9).

2. The microbattery according to claim 1, **characterized in that** the alumina plug (9) has a thickness comprised between 20 and 30nm.

3. The microbattery according to one of the claims 1 to 2, **characterized in that** the packaging comprises a covering layer (11) of polymer intercalated between the metal layer (8) and the stack.

4. A method for producing a microbattery according to one of the claims 1 to 3, **characterized in that** it successively comprises:
- formation of the first current collector (2) and second current collector (3) on the substrate (1),
- formation of the alumina plug (9) on the first collector (2) and production of the stack,
- encapsulation of the stack by a metal layer (8) in electrical contact with the second current collector (3) on the one hand and in contact with the alumina plug (9) on the other hand.

5. The method according to claim 4, **characterized in that** one of the electrodes is a cathode in contact with the first current collector, said cathode being made from a material chosen from TiOS, TiS2 or V2O5.

6. The method according to one of the claims 4 and 5, wherein the alumina plug is deposited by atomic layer deposition (ALD) at a temperature comprised between 20°C and 60°C.

## Patentansprüche

1. Mikrobatterie mit einem ersten Stromkollektor (2) und einem zweiten Stromkollektor (3), welche auf einem Substrat (1) angebracht sind, einem Stapel mit zwei durch eine elektrolytischen Folie (5) getrennten Elektroden (4, 7), wobei jede Elektrode (4, 7) mit einem entsprechenden Kollektor verbunden ist, wobei eine der Elektroden eine Anode (7) auf Lithiumbasis ist, wobei der Stapel durch eine Einkapselung mit einer Metallschicht (8) bedeckt ist, wobei der erste Stromkollektor (2) aus der Einkapselung vorsteht und der zweite Kollektor (3) die Metallschicht (8) kontaktiert,
**dadurch gekennzeichnet, dass** ein Zapfen (9) aus Aluminiumoxid mit einer Dicke von weniger als 30nm zwischen dem ersten Stromkollektor (2) und der Metallschicht (8) angeordnet ist, wobei die den ersten Stromkollektor (2) kontaktierende Elektrode durch den Zapfen (9) aus Aluminiumoxid elektrisch von der Metallschicht (8) isoliert ist.

2. Mikrobatterie gemäß Anspruch 1, **dadurch gekennzeichnet, dass** der Zapfen (9) aus Aluminiumoxid eine Dicke zwischen 20 und 30 nm aufweist,

3. Mikrobatterie gemäß einem der Ansprüche 1 bis 2, **dadurch gekennzeichnet, dass** die Einkapselung eine Deckschicht (11) aus Polymer aufweist, die zwischen der Metallschicht (8) und dem Stapel eingeschoben ist.

4. Verfahren zur Herstellung einer Mikrobatterie gemäß einem der Ansprüche 1 bis 3, **dadurch gekennzeichnet, dass** es die aufeinanderfolgenden Schritte umfasst:
- Ausbildung des ersten Stromkollektors (2) und des zweiten Stromkollektors (3) auf dem Substrat (1),
- Ausbildung des Zapfens (9) auf dem ersten Kollektor (2) und Ausführung des Stapels,
- Einkapselung des Stapels durch eine Metallschicht (8) in elektrischem Kontakt mit dem zweiten Stromkollektor (3) einerseits und in Kontakt mit dem Zapfen (9) aus Aluminiumoxid andererseits.

5. Verfahren gemäß Anspruch 4, **dadurch gekennzeichnet, dass** eine der Elektroden eine Kathode ist, die in Kontakt mit dem ersten Stromkollektor steht, wobei die Kathode aus einem Material ausgewählt aus TiOS, TiS₂ oder V₂O₅ hergestellt ist.

6. Verfahren gemäß einem der Ansprüche 4 und 5, **dadurch gekennzeichnet, dass** der Zapfen aus Aluminiumoxid durch Ablage einer Atomschicht (ALD) bei einer Temperatur zwischen 20°C und 60°C eingebracht wird.
